# EUROPEAN PATENT APPLICATION

(11) **EP 3 273 400 A1**
(43) Date of publication of application: **24.01.2018**
(21) Application number: 17181808.1
(22) Date of filing: 18.07.2017
(51) Int. Cl.: G06Q 30/02, G06Q 10/00

(54) **IMAGE FORMING SYSTEM AND CHARGING MANAGEMENT METHOD**

(30) Priority: 19.07.2016 JP 2016141017; 19.07.2016 JP 2016141016
(71) Applicant: KYOCERA Document Solutions Inc., Chuo-ku, Osaka-shi Osaka 540-8585 (JP)
(72) Inventor: ARAYA, Takeshi, Osaka 540-8585 (JP)
(74) Representative: Meissner Bolte Partnerschaft mbB

(57) **Abstract**

An image forming system (100) includes a charging management server (10) and a plurality of image forming apparatuses (40) managed by the charging management server (10). The charging management server (10) and the plurality of image forming apparatuses (40) are connected to a network. The charging management server (10) uses a management database (17a) to obtain a model name of a target image forming apparatus, uses a model-release date table (17b) to obtain a release date of the target image forming apparatus, calculates the count of elapsed days since the release date to the present, and uses the count of the elapsed days to obtain a discount rate in charging for the target image forming apparatus based on a discount rate table (17c).

## Description

### BACKGROUND

Unless otherwise indicated herein, the description in this section is not prior art to the claims in this application and is not admitted to be prior art by inclusion in this section.

Manufacturers of copiers, multi-functional peripherals (MFP), printers, and similar device (hereinafter generally referred to as an image forming apparatus) have developed and provided a typical management system to manage all image forming apparatuses installed at customers' sites.

For example, there has been proposed a technique that provides a center that manages all the image forming apparatuses of customers instead of managing by each of service stores. The center provides the service stores with information to manage a schedule for maintenance and inspection including usage conditions of all the image forming apparatuses. This ensures reduction in man-hour of the service stores taken for managing the image forming apparatuses of customers.

There has been also proposed a technique that provides a server that acquires customer information and product information of a first customer who dealt with a product at a store. The server extracts a second customer who has a same attribute as the first customer, and provides information regarding the product dealt by the first customer to the store of the second customer.

### SUMMARY

An image forming system according to one aspect of the invention includes a charging management server and a plurality of image forming apparatuses managed by the charging management server. The charging management server and the plurality of image forming apparatuses are connected to a network. The charging management server includes a communication unit communicable via the network, a management database, a model-release date table, a discount rate table, a management unit, a discount rate processing unit, and a charging management unit. The management database manages the plurality of image forming apparatuses in groups. The model-release date table includes combinations of model names and release dates of the plurality of image forming apparatuses. The discount rate table is defined such that a discount rate of a charge decreases, as a count of days elapsed since the release date of the plurality of image forming apparatuses increases. The management unit uses the management database to prepare a list of the image forming apparatuses belonging to one group. The discount rate processing unit uses the management database to obtain a model name of a target image forming apparatus for each of the image forming apparatuses belonging to the one group based on the list prepared by the management unit, uses the model-release date table to obtain the release date of the target image forming apparatus, calculates the count of days elapsed since the obtained release date to the present, and uses the calculated count of the elapsed days to obtain the discount rate in charging for the target image forming apparatus based on the discount rate table. The charging management unit calculates a total amount of fees charged on the user based on the discount rates obtained by the discount rate processing unit for each of the image forming apparatuses in the group.

These as well as other aspects, advantages, and alternatives will become apparent to those of ordinary skill in the art by reading the following detailed description with reference where appropriate to the accompanying drawings. Further, it should be understood that the description provided in this summary section and elsewhere in this document is intended to illustrate the claimed subject matter by way of example and not by way of limitation.

### BRIEF DESCRIPTION OF THE DRAWINGS

FIG. 1 illustrates a general view for describing an entire image of an environment where a charging management system according to a first embodiment of the invention operates;
FIG. 2 illustrates a diagram for describing a concept of groups;
FIG. 3 illustrates a configuration where a charging management server is configured of a general computer;
FIG. 4 illustrates an exemplary model-release date table;
FIG. 5 illustrates an exemplary discount rate table;
FIG. 6 illustrates a flow of processes in a charging management server;
FIG. 7 illustrates a diagram for describing a charging method (No. 1) that uses groups according to a second embodiment;
FIG. 8 illustrates a configuration when a charging management server is constituted of a general computer;
FIG. 9 illustrates a flow of processes in the charging management server;
FIG. 10 illustrates a diagram for describing a charging method (No. 2) that uses groups according to a third embodiment;
FIG. 11 illustrates a configuration when a charging management server is constituted of a general computer; and
FIG. 12 illustrates a flow of processes in the charging management server.

### DETAILED DESCRIPTION

Example apparatuses are described herein. Other example embodiments or features may further be utilized, and other changes may be made, without departing from the spirit or scope of the subject matter presented herein. In the following detailed description, reference is made to the accompanying drawings, which form a part thereof.

The example embodiments described herein are not meant to be limiting. It will be readily understood that the aspects of the present invention, as generally described herein, and illustrated in the drawings, can be arranged, substituted, combined, separated, and designed in a wide variety of different configurations, all of which are explicitly contemplated herein.

The following describes embodiments of the invention by referring to the drawings.

### First Embodiment

First, a description will be given of a first embodiment.

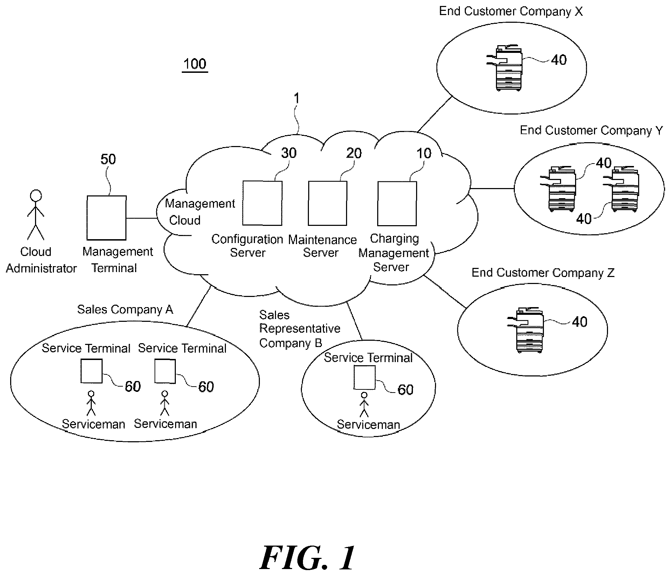

First, a description will be given of an entire image of an environment where a charging management system according to the first embodiment of the invention operates. FIG. 1 illustrates a general view for describing the entire image of the environment where a charging management system 100 according to the first embodiment of the invention operates.

The charging management system 100 includes a charging management server 10A in a management cloud 1, and image forming apparatuses 40 that are managed by the charging management server 10A and belong to groups (described below) to be charged.

The management cloud 1 includes a configuration server 30 and a maintenance server 20. The configuration server 30 manages configurations of the image forming apparatuses 40 managed by the management cloud 1. The maintenance server 20 maintains the image forming apparatuses 40 managed by the management cloud 1.

A cloud administrator accesses the management cloud 1 from a management terminal 50 that manages the management cloud 1 so as to manage the management cloud 1.

The management cloud 1 remotely manages the image forming apparatuses 40 installed at and used by end customers Company X, Company Y, and Company Z over a network.

Servicemen (salespersons may be included) from Sales Company A and Sales Representative Company B become users of the management cloud 1 to perform maintenance and similar operation of the image forming apparatuses 40 of the respective end customers. The serviceman accesses the management cloud 1 via a service terminal 60 to remotely maintain the image forming apparatuses 40 installed at sites in the respective end customers or to perform similar operation.

The charging management server 10A charges the sales company and the sales representative company for usage fees of the management cloud 1 corresponding to the numbers of the image forming apparatuses 40 of the end customers, the image forming apparatuses 40 are registered by the sales company and the sales representative company on the groups managed by the respective companies. Alternatively, the charging management server 10A charges the sales company and the sales representative company usage fees of the management cloud 1 corresponding to the number of groups reference-able by the user of the sales company and the sales representative company.

The entire image of the environment where the charging management system 100 according to the first embodiment of the invention operates has been described above.

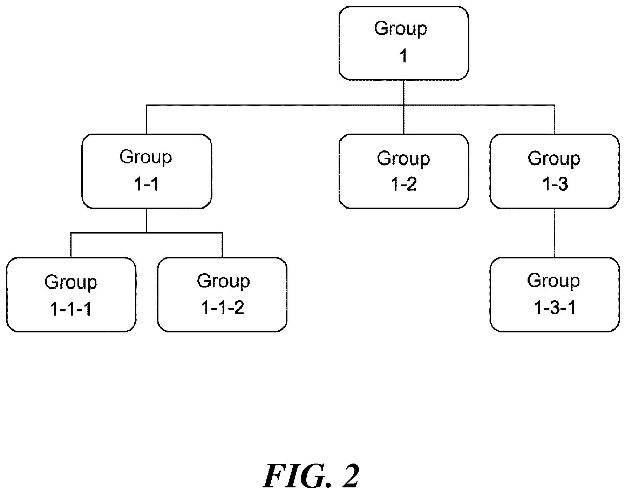

The following describes a concept of the groups. FIG. 2 illustrates a diagram for describing the concept of the groups.

The charging management server 10A according to the first embodiment of the invention uses the concept of the groups for management and similar operation of the image forming apparatus 40, and for management of charging on the sales company and the sales representative company.

The groups are stratified in a tree structure.

The group is basically assumed to be one independent company organization. The above-described users such as the serviceman can belong to the groups.

The group includes the image forming apparatuses 40 as targets to be managed.

The vertical hierarchy in FIG. 2 may indicate, for example, an inclusion relationship of business areas of sales companies or similar companies.

The concept of the groups has been described above.

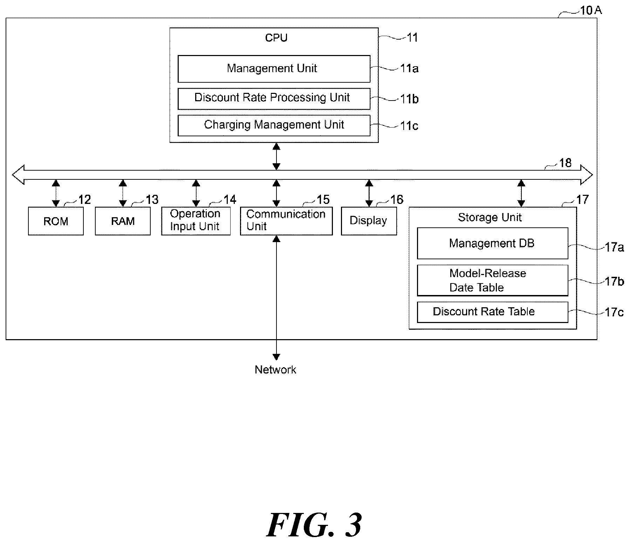

Next, a description will be given of a configuration of the charging management server 10A. The charging management server 10A may be constituted of dedicated hardware and software or may be constituted of a general computer. FIG. 3 illustrates a configuration when the charging management server 10A is configured of the general computer.

As illustrated in FIG. 3, the charging management server 10A includes a Central Processing Unit (CPU) 11, a Read Only Memory (ROM) 12, a Random Access Memory (RAM) 13, an operation input unit 14, a communication unit 15, a display 16, and a storage unit 17. These respective blocks are connected via a bus 18.

The ROM 12 stores a plurality of programs such as firmware and data for executing various processes. The RAM 13 is used as a working area for the CPU 11 and temporarily holds an Operating System (OS), various applications during execution, and various pieces of data during processing.

The storage unit 17 is, for example, a Hard Disk Drive (HDD), a flash memory, or other non-volatile memories. The storage unit 17 stores the OS, the various applications, various pieces of data, a management database (DB) 17a, a model-release date table 17b, and a discount rate table 17c.

The management DB 17a stores information for managing the image forming apparatuses 40 by group, for example, a list of the image forming apparatuses 40 belonging to the groups, model names of respective image forming apparatuses 40, and similar information.

The model-release date table 17b stores release dates (sales start dates) by model of the image forming apparatus 40.

The discount rate table 17c includes discount rates corresponding to the number of days elapsed since the release date by the image forming apparatus 40 when the management cloud 1 is used.

The communication unit 15 is connected to a network for exchanging information with the maintenance server 20, the configuration server 30, the image forming apparatus 40, the management terminal 50, and the service terminal 60.

The CPU 11 loads a program corresponding to an instruction given from the operation input unit 14 or given via the network among the plurality of programs stored in the ROM 12 and the storage unit 17 to the RAM 13. The CPU 11 appropriately controls the display 16 and the storage unit 17 according to this loaded program.

The operation input unit 14 is, for example, a pointing device such as a computer mouse, a keyboard, a touch panel, and other operating devices.

The display 16 is, for example, a liquid crystal display, an Electro-Luminescence (EL) display, a plasma display, or similar display.

Next, a description will be given of function blocks achieved by execution of the program by the CPU 11.

The function blocks achieved by the CPU 11 in the charging management server 10A are a management unit 11a, a discount rate processing unit 11b, and a charging management unit 11c.

The management unit 11a uses the management DB 17a to manage the image forming apparatuses belonging to the respective groups, thus preparing the list of the image forming apparatuses 40 belonging to the respective groups.

The discount rate processing unit 11b uses the model-release date table 17b to identify the release dates for each image forming apparatus 40 belonging to each group based on the list, which is prepared by the management unit 11a, of the image forming apparatuses 40 belonging to specific groups, thus calculating the number of days elapsed since the release date. Then, the discount rate processing unit 11b uses the discount rate table 17c to identify the discount rate of the usage fee of the management cloud 1 for each image forming apparatus 40.

The charging management unit 11c calculates total amounts of the fees charged on the user based on the discount rate, identified by the discount rate processing unit 11b, of each image forming apparatus 40 in the group. The total amount of the fee is a sum of the fees (discounted based on the discount rate) per image forming apparatus for each image forming apparatus 40 belonging to the groups.

The configuration of the charging management server 10A has been described above.

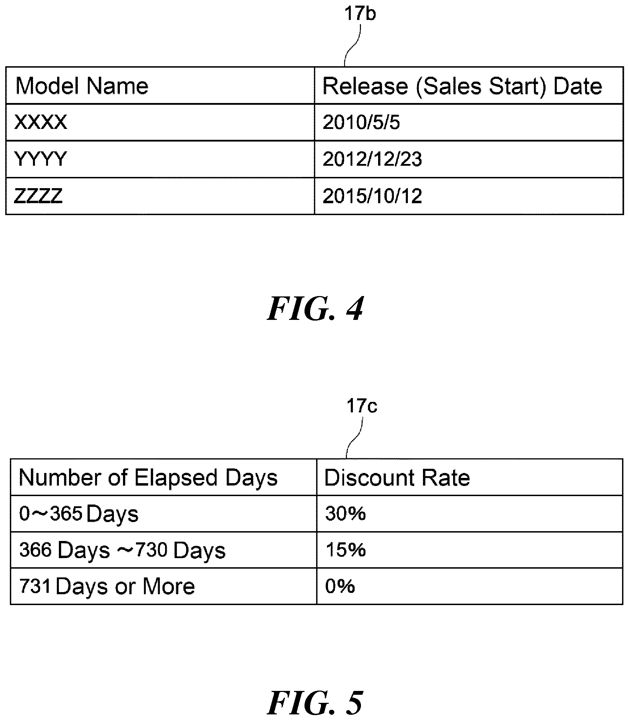

Next, a description will be given of an exemplary model-release date table 17b. FIG. 4 illustrates an exemplary model-release date table 17b.

For example, in a case of the image forming apparatus 40 with the model name XXXX, the release date (sales start date, also) is obtained to be May 5, 2010 based on the model-release date table 17b.

The exemplary model-release date table 17b has been described above.

Next, a description will be given of an exemplary discount rate table 17c. FIG. 5 illustrates an exemplary discount rate table 17c.

For example, the discount rate of the fee is 30% when the number of days elapsed since the release date is 0 to 365.

Then, when the number of elapsed days is 366 to 730, the discount rate of the fee is decreased to 15%.

Thus, a discount rate system is configured such that, as the number of days elapsed since the release date increases, that is, as the image forming apparatus 40 gets old, the discount rate decreases.

Since the usage fee of the management cloud 1 is monthly charged, a high discount rate is a great motivation for the users of the sales company and the sales representative company to sell the image forming apparatus 40 of new model as much as possible to the end customer to register on the group.

The exemplary discount rate table 17c has been described above.

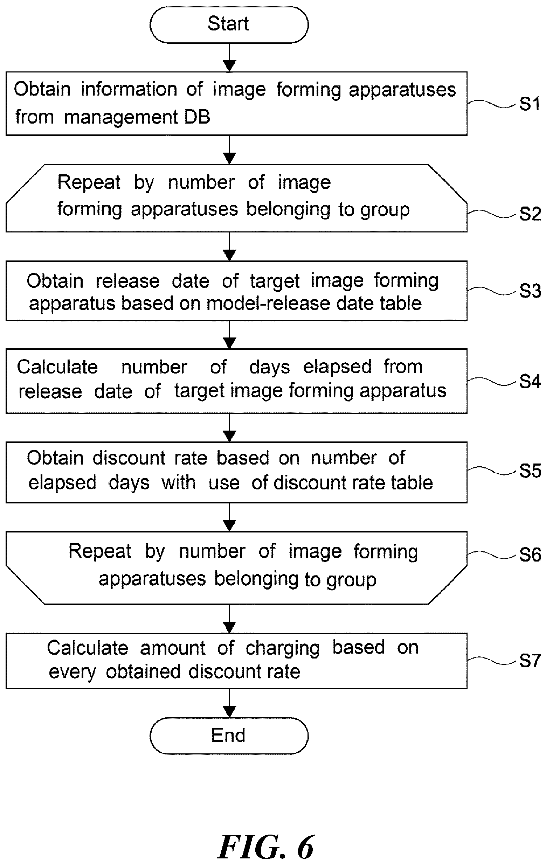

Next, a description will be given of a flow of processes in the charging management server 10A. FIG. 6 illustrates the flow of the processes in the charging management server 10A.

First, the management unit 11a obtains the list of the image forming apparatuses 40 belonging to the specific group from the management DB 17a (Step S1).

Next, the discount rate processing unit 11b repeats from Step S3 to Step S5, thus the discount rate is repeatedly obtained by the number of the image forming apparatuses 40 belonging to the groups (Step S2).

Next, the discount rate processing unit 11b uses the model-release date table 17b to obtain the release date of a target image forming apparatus 40 whose discount rate is to be obtained (Step S3).

Next, the discount rate processing unit 11b calculates the number of days elapsed since the release date of the target image forming apparatus 40 whose discount rate is to be obtained to the present (Step S4).

Next, the discount rate processing unit 11b uses the discount rate table 17c to obtain the discount rate based on the calculated number of elapsed days (Step S5).

When the obtaining the discount rate on every image forming apparatus 40 belonging to the groups completes, the charging management unit 11c calculates the fees of the individual image forming apparatus 40 based on every obtained discount rate, sums the calculated fees, and calculates the amount of charging of the entire group (Step S7).

The flow of the processes in the charging management server 10A has been described above.

As described above, the charging management system 100 according to the invention includes the charging management server 10A and a plurality of image forming apparatuses 40 managed by the charging management server 10A, the charging management server 10A and the plurality of image forming apparatuses 40 are connected to the network. The charging management server 10A includes the communication unit 15, the management DB 17a, the model-release date table 17b, the discount rate table 17c, the management unit 11a, the discount rate processing unit 11b, and the charging management unit 11c. The communication unit 15 is communicable via the network. The management DB 17a includes the model names for each of the plurality of image forming apparatuses 40 and manages the plurality of image forming apparatuses 40 in groups. The model-release date table 17b includes combinations of the model name and the release date of the plurality of image forming apparatuses 40. The discount rate table 17c is defined such that, as a count of days elapsed since the release date of the plurality of image forming apparatuses 40 increases, a discount rate of a charge decreases. The management unit 11a uses the management DB 17a to prepare a list of the image forming apparatuses 40 belonging to one group. The discount rate processing unit 11b uses the management DB 17a to obtain the model name of a target image forming apparatus 40 for each image forming apparatus 40 belonging to one group based on the list prepared by the management unit 11a, uses the model-release date table 17b to obtain the release date of the target image forming apparatus 40, calculates the count of days elapsed since the obtained release date to the present, and uses the calculated count of the elapsed days to obtain the discount rate in charging on the target image forming apparatus 40 based on the discount rate table 17c. The charging management unit 11c calculates a total amount of fees charged on the user (sales company, sales representative company) based on the discount rates obtained by the discount rate processing unit 11b for each image forming apparatus 40 in the group.

Thus, the configuration provides the sales company and the sales representative company with the motivation for causing the end customer to purchase a new model.

### Second Embodiment

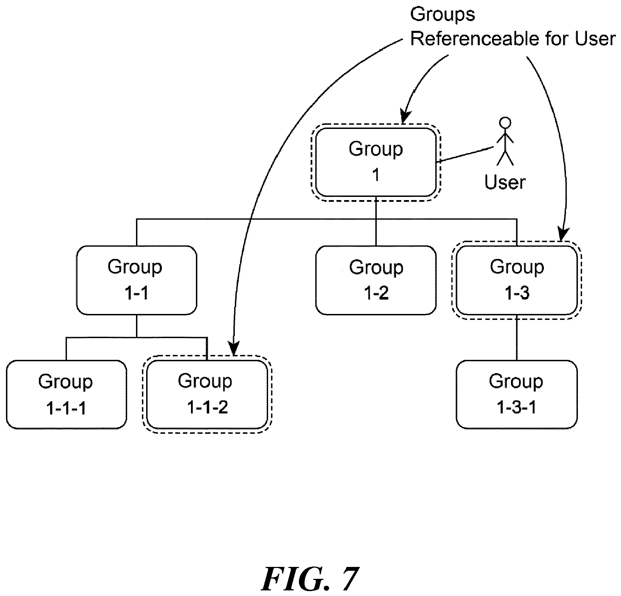

Next, a description will be given of a charging method (No. 1) that uses the groups. FIG. 7 illustrates a diagram for describing the charging method (No. 1) that uses groups.

In the example illustrated in FIG. 7, the user belongs to a group 1 and is authorized to refer to a group 1-3 and a group 1-1-2 among the groups subordinate to the group 1.

In this example, the number of the groups reference-able for the user is three, and when a fee for X yen per group is charged, the fee for 3X yen is charged on the user.

The charging method (No. 1) that uses the groups has been described above.

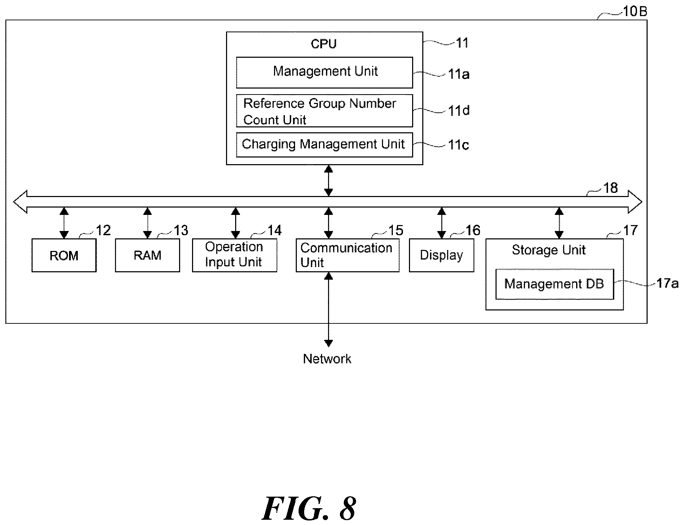

Next, a description will be given of a configuration of a charging management server 10B. The charging management server 10B may be constituted of dedicated hardware and software or may be constituted of a general computer. FIG. 8 illustrates a configuration when the charging management server 10B is configured of the general computer.

As illustrated in FIG. 8, the charging management server 10B includes a Central Processing Unit (CPU) 11, a Read Only Memory (ROM) 12, a Random Access Memory (RAM) 13, an operation input unit 14, a communication unit 15, a display 16, and a storage unit 17. These respective blocks are connected via a bus 18.

The ROM 12 stores a plurality of programs such as firmware and data for executing various processes. The RAM 13 is used as a working area for the CPU 11 and temporarily holds an Operating System (OS), various applications during execution, and various pieces of data during processing.

The storage unit 17 is, for example, a Hard Disk Drive (HDD), a flash memory, or other non-volatile memories. The storage unit 17 stores the OS, the various applications, various pieces of data, and a management database (DB) 17a.

The management DB 17a stores information for managing the groups and an image forming apparatus 40, information on the reference-able groups for each user, and similar information.

The communication unit 15 is connected to a network for exchanging information with a maintenance server 20, a configuration server 30, the image forming apparatus 40, a management terminal 50, and a service terminal 60.

The CPU 11 loads a program corresponding to an instruction given from the operation input unit 14 or given via the network among the plurality of programs stored in the ROM 12 and the storage unit 17 to the RAM 13. The CPU 11 appropriately controls the display 16 and the storage unit 17 according to this loaded program.

The operation input unit 14 is, for example, a pointing device such as a computer mouse, a keyboard, a touch panel, and other operating devices.

The display 16 is, for example, a liquid crystal display, an Electro-Luminescence (EL) display, a plasma display, or similar display.

Next, a description will be given of function blocks achieved by execution of the program by the CPU 11.

The function blocks achieved by the CPU 11 in the charging management server 10B are a management unit 11a, a reference group number count unit 11d, and a charging management unit 11c.

The management unit 11a uses the management DB 17a to pick up the groups reference-able for each user.

The reference group number count unit 11d counts the number of the reference-able groups picked up by the management unit 11a.

The charging management unit 11c calculates the fee charged on the user corresponding to the number of the groups counted by the reference group number count unit 11d.

The configuration of the charging management server 10B has been described above.

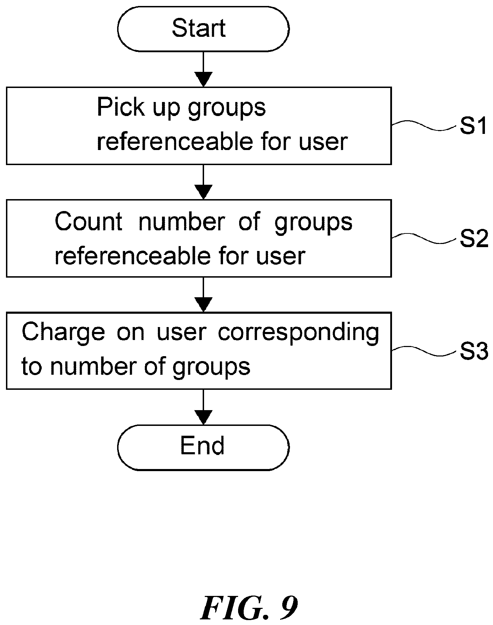

Next, a description will be given of a flow of processes in the charging management server 10B. FIG. 9 illustrates the flow of the processes in the charging management server 10B.

First, the management unit 11a uses the management DB 17a to pick up the groups reference-able for the user (Step S1).

Next, the reference group number count unit 11d counts the number of the groups picked up as the group reference-able for the user (Step S2).

Next, the charging management unit 11c charges the user corresponding to the number of the counted groups for the usage fees of the management cloud 1 (Step S3).

The flow of the processes in the charging management server 10B has been described above.

The second embodiment has been described above.

### Third Embodiment

Next, a description will be given of a third embodiment. The third embodiment is different from the second embodiment in a point that the usage fees of the management cloud 1 is charged corresponding to the number of hierarchies in which the groups reference-able for the user are included instead of charging corresponding to the number of the groups reference-able for the user.

In the following description, only the point different from the second embodiment will be described.

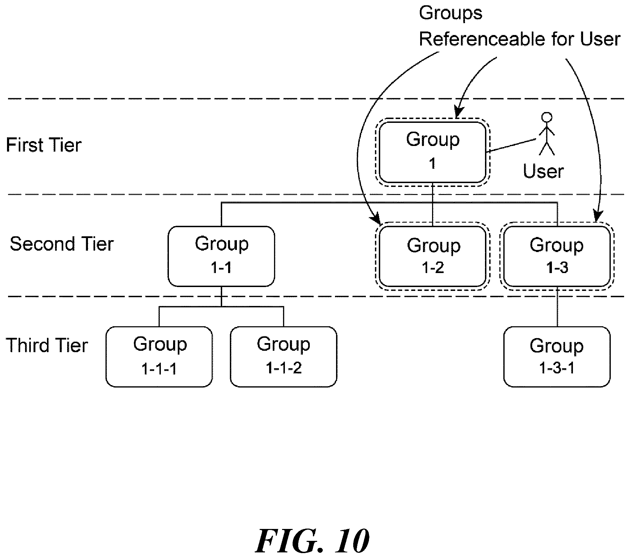

Next, a description will be given of a charging method (No. 2) that uses the groups. FIG. 10 illustrates a diagram for describing the charging method (No. 2) that uses the groups.

In the example illustrated in FIG. 10, the user belongs to a group 1 and is authorized to refer to a group 1-2 and a group 1-3 among the groups subordinate to the group 1.

Then, the tree structure of the groups includes a first tier in which the group 1 is included, a second tier in which a group 1-1, the group 1-2, and the group 1-3 are included, and a third tier in which a group 1-1-1, a group 1-1-2, and a group 1-3-1 are included.

In this example, the groups reference-able for the user are included in two tiers of the first tier and the second tier, and when a fee for Y yen per tier is charged, the fee for 2Y yen is charged on the user.

The charging method (No. 2) that uses the groups has been described above.

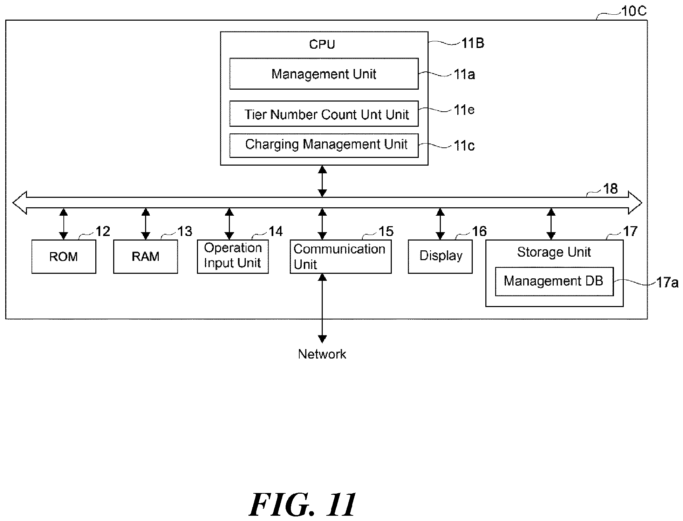

Next, a description will be given of a configuration of a charging management server 10C. The charging management server 10C may be constituted of dedicated hardware and software or may be constituted of a general computer. FIG. 11 illustrates a configuration when the charging management server 10C is configured of the general computer.

A storage unit 17 is for example, a Hard Disk Drive (HDD), a flash memory, or other non-volatile memories. The storage unit 17 stores the OS, the various applications, various pieces of data, a management (DB) 17a.

The management DB 17a stores information for managing the groups and an image forming apparatus 40, information on the groups reference-able for each user, information on the tiers in which the groups are included, and similar information.

Next, a description will be given of function blocks achieved by execution of the program by a CPU 11.

The function blocks achieved by the CPU 11 in the charging management server 10C are a management unit 11a, a tier number count unit 11e, and a charging management unit 11c.

The management unit 11a uses the management DB 17a to pick up the groups reference-able for each user, and to obtain the tiers in which the picked up groups are included.

The tier number count unit 11e counts the number of the tiers obtained by the management unit 11a.

The charging management unit 11c calculates the fee charged on the user corresponding to the number of the tiers counted by the tier number count unit 11e.

The configuration of the charging management server 10C has been described above.

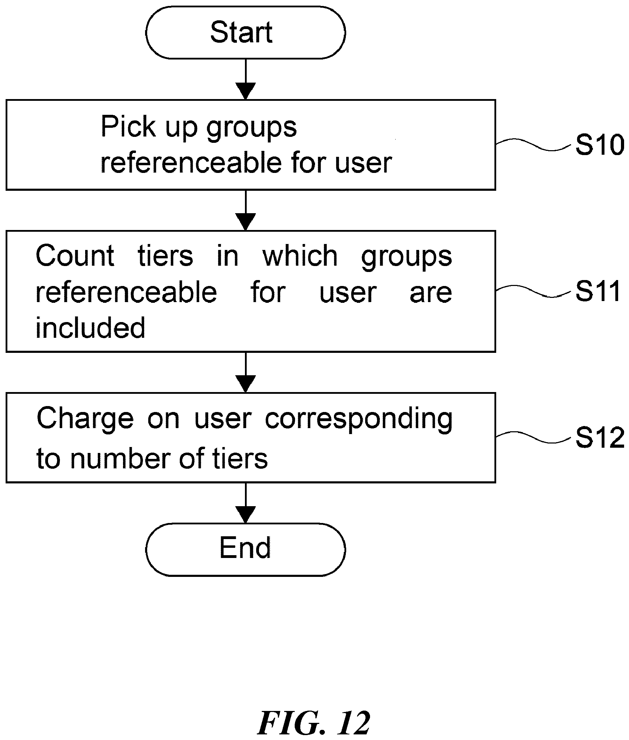

Next, a description will be given of a flow of processes in the charging management server 10C. FIG. 12 illustrates the flow of the processes in the charging management server 10C.

First, the management unit 11a uses the management DB 17a to pick up the groups reference-able for the user, and obtains the tiers in which the picked up groups are included (Step S10).

Next, the tier number count unit 11e counts the number of the tiers in which the groups reference-able for the user are included (Step S11).

Next, the charging management unit 11c charges the user corresponding to the number of the counted tiers for the usage fees of the management cloud 1 (Step S12).

The flow of the processes in the charging management server 10C has been described above.

The third embodiment has been described above.

In the above description, the user is assumed to be a general user authorized to refer to only the group to which the user himself/herself belongs unless the user is specifically authorized. In contrast to this, a special user as a manager authorized to refer to all the subordinate groups by Default may be additionally charged for the fee by a different method, or may be charged corresponding to the number of the reference-able groups or the number of the tiers in which the subordinate groups are included similarly to the general user.

As described above, the charging management system 100 according to the invention includes the charging management server 10B and plurality of image forming apparatuses 40 managed by the charging management server 10B, the charging management server 10B and the plurality of image forming apparatuses 40 are connected to the network. The charging management server 10B includes the communication unit 15, the management DB 17a, the management unit 11a, the reference group number count unit 11d, and the charging management unit 11c. The communication unit 15 is communicable via the network. The management DB 17a manages the plurality of image forming apparatuses 40 in groups reference-able for the user. The management unit 11a uses the management DB 17a to pick up groups reference-able for a specific user. The reference group number count unit 11d counts a count of the groups picked up by the management unit 11a. The charging management unit 11c calculates fees charged on the user corresponding to the count of the groups counted by the reference group number count unit 11d.

Thus, the configuration ensures the user to be appropriately charged.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. An image forming system (100) comprising:
- a charging management server (10); and
- a plurality of image forming apparatuses (40) managed by the charging management server (10), the charging management server (10) and the plurality of image forming apparatuses (40) being connected to a network,
**characterized in that**
- the charging management server (10) includes:
- a management database (17a) that manages the plurality of image forming apparatuses (40) in groups;
- a model-release date table (17b) that includes combinations of a model name and a release date of each of the plurality of image forming apparatuses (40); and
- a discount rate table (17c) defined such that a discount rate of a charge decreases, as a count of elapsed days since the release date of each of the plurality of image forming apparatuses (40) increases, and
- a Central Processing Unit (CPU) in the charging management server (10) functions as:
- a communication unit (15) communicable via the network;
- a management unit (11a) that, by the management database (17a), prepares a list of the plurality of image forming apparatuses (40) belonging to a group;
- a discount rate processing unit (11b) that, (i) by the management database (17a), obtains the model name of each of the plurality of image forming apparatuses (40) belonging to the group based on the list prepared by the management unit (11a), (ii) by the model-release date table (17b), obtains the release date, (iii) calculates the count of elapsed days since the release date to the present, and (iv) by the count of elapsed days, obtains the discount rate based on the discount rate table (17c); and
- a charging management unit (11c) that calculates a fee charged on a user based on the discount rate obtained by the discount rate processing unit (11b) for each of the plurality of image forming apparatuses (40) in the group.

2. The image forming system (100) according to claim 1, wherein
- the management unit (11a), by the management database (17a), further picks up the groups to which the user refers,
- the CPU further functions as a reference group number count unit (11d) that counts a count of the groups picked up by the management unit (11a), and
- the charging management unit (11c) further calculates the fee charged on the user based on the count of the groups counted by the reference group number count unit (11d).

3. The image forming system (100) according to claim 2, wherein
- the management unit (11a) further obtains tiers in which the picked up groups are included,
- the CPU further functions as a tier number count unit (11e) that counts a count of the tiers obtained by the management unit (11a), and
- the charging management unit (11c) further calculates the fee charged on the user based on the count of the tiers counted by the tier number count unit (11e).

4. A charging management method in the image forming system (100) including:
- a charging management server (10); and
- a plurality of image forming apparatuses (40) managed by the charging management server (10), the method comprising:
- being connected to a network between the charging management server (10) and the plurality of image forming apparatuses (40),
**characterized in that**
the method further comprises:
- preparing a list of the plurality of image forming apparatuses (40) belonging to a group by a management database (17a) that manages the plurality of image forming apparatuses (40) in groups;
- obtaining, by the management database (17a), a model name of each of the plurality of image forming apparatuses belonging to the group based on the list;
- obtaining a release date, by a model-release date table (17b) including combinations of the model name and a release date;
- calculating a count of elapsed days elapsed since the release date to the present;
- obtaining, by the count of elapsed days, a discount rate based on a discount rate table (17c) defined such that the discount rate of a charge decreases, as the count of elapsed days since the release date of each of the plurality of image forming apparatuses (40) increases; and
- calculating a fee charged on a user based on the discount rate for each of the plurality of image forming apparatuses (40) in the group.

5. The charging management method according to claim 4,
further comprising:
- pick upping the groups to which the user refers;
- counting a count of the picked up groups; and
- calculating the fee charged on the user based on the count of the groups.

6. The charging management method according to claim 5, further comprising:
- obtaining tiers in which the picked up groups are included;
- counting a count of the tiers; and
- calculating the fee charged on the user based on the count of the tiers.
